(19) Europäisches Patentamt
European Patent Office
Office européen des brevets

(11) **EP 1 497 151 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(21) Anmeldenummer: **03727188.9**

(22) Anmeldetag: **10.04.2003**

(51) Int Cl.:
**B60W 20/00** *(2006.01)* **F02N 11/08** *(2006.01)*

(86) Internationale Anmeldenummer:
**PCT/DE2003/001192**

(87) Internationale Veröffentlichungsnummer:
**WO 2003/086804 (23.10.2003 Gazette 2003/43)**

(54) **VERFAHREN ZUM BETRIEB EINES KRAFTFAHRZEUGES**

METHOD FOR OPERATING A MOTOR VEHICLE

PROCEDE POUR FAIRE FONCTIONNER UN VEHICULE AUTOMOBILE

(84) Benannte Vertragsstaaten:
**AT BE BG CH CY CZ DE DK EE ES FI FR GB GR HU IE IT LI LU MC NL PT RO SE SI SK TR**

(30) Priorität: **10.04.2002 DE 10215715
24.08.2002 DE 10238866**

(43) Veröffentlichungstag der Anmeldung:
**19.01.2005 Patentblatt 2005/03**

(73) Patentinhaber: **LuK Lamellen und Kupplungsbau Beteiligungs KG
77815 Bühl (DE)**

(72) Erfinder:
• **BERGER, Reinhard
77815 Bühl (DE)**
• **KÜPPER, Klaus
77815 Bühl (DE)**
• **SCHNEIDER, Georg
76137 Karlsruhe (DE)**

(56) Entgegenhaltungen:
**EP-A- 1 177 930         WO-A- 01/56824
DE-A- 19 814 402         DE-A- 19 838 853
US-A- 4 533 011          US-B1- 6 336 889**

**Beschreibung**

Die Erfindung betrifft ein Verfahren zum Betrieb eines Kraftfahrzeuges mit einem Antriebsmotor und einem Getriebe im Antriebsstrang.

Ein Verfahren gemäß Oberbegriff von Anspruch 1 ist aus der EP-A-1 177 930 bekannt.

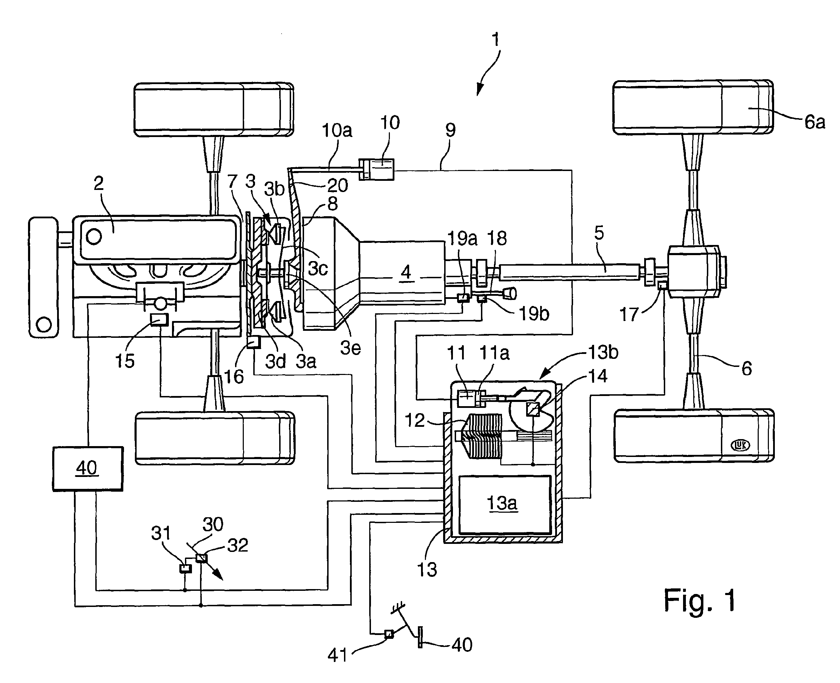

Gemäß Figur 1 weist ein Fahrzeug 1 eine Antriebseinheit 2, wie einen Motor oder eine Brennkraftmaschine, auf. Weiterhin sind im Antriebsstrang des Fahrzeuges 1 ein Drehmomentübertragungssystem 3 und ein Getriebe 4 angeordnet. In diesem Ausführungsbeispiel ist das Drehmomentübertragungssystem 3 im Kraftfluss zwischen Motor und Getriebe angeordnet, wobei ein Antriebsmoment des Motors über das Drehmomentübertragungssystem 3 an das Getriebe 4 und von dem Getriebe 4 abtriebsseitig an eine Abtriebswelle 5 und an eine nachgeordnete Achse 6 sowie an die Räder 6a übertragen wird.

Das Drehmomentübertragungssystem 3 ist als Kupplung, wie z. B. als Reibungskupplung, Lamellenkupplung, Magnetpulverkupplung oder Wandlerüberbrückungskupplung, ausgestaltet, wobei die Kupplung eine selbsteinstellende oder eine verschleißausgleichende Kupplung sein kann. Das Getriebe 4 ist ein unterbrechungsfreies Schaltgetriebe (USG). Entsprechend dem erfindungsgemäßen Gedanken kann das Getriebe auch ein automatisiertes Schaltgetriebe (ASG) sein, welches mittels zumindest eines Aktors automatisiert geschaltet werden kann. Als automatisiertes Schaltgetriebe ist im weiteren ein automatisiertes Getriebe zu verstehen, welches mit einer Zugkraftunterbrechung geschaltet wird und bei dem der Schaltvorgang der Getriebeübersetzung mittels zumindest eines Aktors angesteuert durchgeführt wird.

Weiterhin kann als USG auch ein Automatgetriebe Verwendung finden, wobei ein Automatgetriebe ein Getriebe im wesentlichen ohne Zugkraftunterbrechung bei den Schaltvorgängen ist und das in der Regel durch Planetengetriebestufen aufgebaut ist.

Weiterhin kann ein stufenlos einstellbares Getriebe, wie beispielsweise Kegelscheibenumschlingungsgetriebe eingesetzt werden. Das Automatgetriebe kann auch mit einem abtriebsseitig angeordneten Drehmomentübertragungssystem 3, wie eine Kupplung oder eine Reibungskupplung, ausgestaltet sein. Das Drehmomentübertragungssystem 3 kann weiterhin als Anfahrkupplung und/oder Wendesatzkupplung zur Drehrichtungsumkehr und/oder Sicherheitskupplung mit einem gezielt ansteuerbaren übertragbaren Drehmoment ausgestaltet sein. Das Drehmomentübertragungssystem 3 kann eine Trockenreibungskupplung oder eine nass laufende Reibungskupplung sein, die beispielsweise in einem Fluid läuft. Ebenso kann es ein Drehmomentwandler sein.

Das Drehmomentübertragungssystem 3 weist eine Antriebsseite 7 und eine Abtriebsseite 8 auf, wobei ein Drehmoment von der Antriebsseite 7 auf die Abtriebsseite 8 übertragen wird, indem z. B. die Kupplungsscheibe 3a mittels der Druckplatte 3b, der Tellerfeder 3c und dem Ausrücklager 3e sowie dem Schwungrad 3d kraftbeaufschlagt wird. Zu dieser Beaufschlagung wird der Ausrückhebel 20 mittels einer Betätigungseinrichtung, z. B. einem Aktor, betätigt.

Die Ansteuerung des Drehmomentübertragungssystems 3 erfolgt mittels einer Steuereinheit 13, wie z. B. einem Steuergerät, welches die Steuerelektronik 13a und den Aktor 13b umfassen kann. In einer anderen vorteilhaften Ausführung können der Aktor 13b und die Steuerelektronik 13a auch in zwei unterschiedlichen Baueinheiten, wie z. B. Gehäusen, angeordnet sein.

Die Steuereinheit 13 kann die Steuer- und Leistungselektronik zur Ansteuerung des Antriebsmotors 12 des Aktors 13b enthalten. Dadurch kann beispielsweise vorteilhaft erreicht werden, dass das System als einzigen Bauraum den Bauraum für den Aktor 13b mit Elektronik benötigt. Der Aktor 13b besteht aus dem Antriebsmotor 12, wie z. B. einem Elektromotor, wobei der Elektromotor 12 über ein Getriebe, wie z. B. ein Schneckengetriebe, ein Stirnradgetriebe, ein Kurbelgetriebe oder ein Gewindespindelgetriebe, auf einen Geberzylinder 11 wirkt. Diese Wirkung auf den Geberzylinder 11 kann direkt oder über ein Gestänge erfolgen.

Die Bewegung des Ausgangsteiles des Aktors 13b, wie z. B. des Geberzylinderkolbens 11a, wird mit einem Kupplungswegsensor 14 detektiert, welcher die Position oder Stellung oder die Geschwindigkeit oder die Beschleunigung einer Größe detektiert, welche proportional zur Position bzw. Einrückposition respektive der Geschwindigkeit oder Beschleunigung der Kupplung ist. Der Geberzylinder 11 ist über eine Druckmittelleitung 9, wie z. B. eine Hydraulikleitung, mit dem Nehmerzylinder 10 verbunden. Das Ausgangselement 10a des Nehmerzylinders ist mit dem Ausrückmittel 20, z. B. einem Ausrückhebel, wirkverbunden, so dass eine Bewegung des Ausgangsteiles 10a des Nehmerzylinders 10 bewirkt, dass das Ausrückmittel 20 ebenfalls bewegt oder verkippt wird, um das von der Kupplung 3 übertragbare Drehmoment anzusteuern.

Der Aktor 13b zur Ansteuerung des übertragbaren Drehmoments des Drehmomentübertragungssystems 3 kann druckmittelbetätigbar sein, d.h., er kann einen Druckmittelgeber- und Nehmerzylinder aufweisen. Das Druckmittel kann beispielsweise ein Hydraulikfluid oder ein Pneumatikmedium sein. Die Betätigung des Druckmittelgeberzylinders kann elektromotorisch erfolgen, wobei der als Antriebselement 12 vorgesehene Elektromotor elektronisch angesteuert werden kann. Das Antriebselement 12 des Aktors 13b kann neben einem elektromotorischen Antriebselement auch ein anderes, beispielsweise druckmittelbetätigtes Antriebselement sein. Weiterhin können Magnetaktoren verwendet werden, um eine Position eines Elementes einzustellen.

Bei einer Reibungskupplung erfolgt die Ansteuerung des übertragbaren Drehmomentes dadurch, dass die Anpressung der Reibbeläge der Kupplungsscheibe zwischen dem Schwungrad 3d und der Druckplatte 3b gezielt erfolgt. Über die Stellung des Ausrückmittels 20, wie z. B. einer Ausrückgabel oder eines Zentralausrückers, kann die Kraftbeaufschlagung der Druckplatte 3b respektive der Reibbeläge gezielt angesteuert werden, wobei die Druckplatte 3b dabei zwischen zwei Endpositionen bewegt und beliebig eingestellt und fixiert werden kann. Die eine Endposition entspricht einer völlig eingerückten Kupplungsposition und die andere Endposition einer völlig ausgerückten Kupplungsposition. Zur Ansteuerung eines übertragbaren Drehmomentes, welches beispielsweise geringer ist als das momentan anliegende Motormoment, kann beispielsweise eine Position der Druckplatte 3b angesteuert werden, die in einem Zwischenbereich zwischen den beiden Endpositionen liegt. Die Kupplung kann mittels der gezielten Ansteuerung des Ausrückmittels 20 in dieser Position fixiert werden. Es können aber auch übertragbare Kupplungsmomente angesteuert werden, die definiert über den momentan anstehenden Motormomenten liegen. In einem solchen Fall können die aktuell anstehenden Motormomente übertragen werden, wobei die Drehmoment-Ungleichförmigkeiten im Antriebsstrang in Form von beispielsweise Drehmomentspitzen gedämpft und/oder isoliert werden.

Zur Ansteuerung des Drehmomentübertragungssystems 3 werden weiterhin Sensoren verwendet, die zumindest zeitweise die relevanten Größen des gesamten Systems überwachen und die zur Steuerung notwendigen Zustandsgrößen, Signale und Messwerte liefern, die von der Steuereinheit verarbeitet werden, wobei eine Signalverbindung zu anderen Elektronikeinheiten, wie beispielsweise zu einer Motorelektronik oder einer Elektronik eines Antiblockiersystems (ABS) oder einer Antischlupfregelung (ASR) vorgesehen sein kann und bestehen kann. Die Sensoren detektieren beispielsweise Drehzahlen, wie Raddrehzahlen, Motordrehzahlen, die Position des Lasthebels, die Drosselklappenstellung, die Gangposition des Getriebes, eine Schaltabsicht und weitere fahrzeugspezifische Kenngrößen.

Die Fig. 1 zeigt, dass ein Drosselklappensensor 15, ein Motordrehzahlsensor 16 sowie ein Tachosensor 17 Verwendung finden können und Messwerte bzw. Informationen an das Steuergerät 13 weiterleiten. Die Elektronikeinheit, wie z. B. eine Computereinheit, der Steuerelektronik 13a verarbeitet die Systemeingangsgrößen und gibt Steuersignale an den Aktor 13b weiter.

Das Getriebe ist als z. B. Stufenwechselgetriebe ausgestaltet, wobei die Übersetzungsstufen mittels eines Schalthebels 18 gewechselt werden oder das Getriebe mittels dieses Schalthebels 18 betätigt oder bedient wird. Weiterhin ist an dem Schalthebel 18 des Handschaltgetriebes zumindest ein Sensor 19b angeordnet, welcher die Schaltabsicht und/oder die Gangposition detektiert und an das Steuergerät 13 weiterleitet. Der Sensor 19a ist am Getriebe angelenkt und detektiert die aktuelle Gangposition und/oder eine Schaltabsicht.

Die Schaltabsichtserkennung unter Verwendung von zumindest einem der beiden Sensoren 19a, 19b kann dadurch erfolgen, dass der Sensor ein Kraftsensor ist, welcher die auf den Schalthebel 18 wirkende Kraft detektiert. Weiterhin kann der Sensor aber auch als Weg- oder Positionssensor ausgestaltet sein, wobei die Steuereinheit aus der zeitlichen Veränderung des Positionssignals eine Schaltabsicht erkennt.

Das Steuergerät 13 steht mit allen Sensoren zumindest zeitweise in Signalverbindung und bewertet die Sensorsignale und Systemeingangsgrößen in der Art und Weise, dass in Abhängigkeit von dem aktuellen Betriebspunkt die Steuereinheit Steuer- oder Regelungsbefehle an den zumindest einen Aktor 13b ausgibt. Der Antriebsmotor 12 des Aktors 13b, z. B. ein Elektromotor, erhält von der Steuereinheit, welche die Kupplungsbetätigung ansteuert, eine Stellgröße in Abhängigkeit von Messwerten und/oder Systemeingangsgrößen und/oder Signalen der angeschlossenen Sensorik. Hierzu ist in dem Steuergerät 13 ein Steuerprogramm als Hard- und/oder als Software implementiert, das die eingehenden Signale bewertet und anhand von Vergleichen und/oder Funktionen und/oder Kennfeldern die Ausgangsgrößen berechnet oder bestimmt.

Das Steuergerät 13 hat in vorteilhafter Weise eine Drehmomentbestimmungseinheit, eine Gangpositionsbestimmungseinheit, eine Schlupfbestimmungseinheit und/oder eine Betriebszustandsbestimmungseinheit implementiert oder es steht mit zumindest einer dieser Einheiten in Signalverbindung. Diese Einheiten können durch Steuerprogramme als Hardware und/oder als Software implementiert sein, so dass mittels der eingehenden Sensorsignale das Drehmoment der Antriebseinheit 2 des Fahrzeuges 1, die Gangposition des Getriebes 4 sowie der Schlupf, welcher im Bereich des Drehmomentübertragungssystems 3 herrscht und der aktuelle Betriebszustand des Fahrzeuges 1 bestimmt werden können. Die Gangpositionsbestimmungseinheit ermittelt anhand der Signale der Sensoren 19a und 19b den aktuell eingelegten Gang. Dabei sind die Sensoren 19a, 19b am Schalthebel und/oder an getriebeinternen Stellmitteln, wie beispielsweise einer zentralen Schaltwelle oder Schaltstange, angelenkt und diese detektieren, beispielsweise die Lage und/oder die Geschwindigkeit dieser Bauteile. Weiterhin kann ein Lasthebelsensor 31 am Lasthebel 30, wie z. B. an einem Gaspedal, angeordnet sein, welcher die Lasthebelposition detektiert. Ein weiterer Sensor 32 kann als Leerlaufschalter fungieren, d.h. bei betätigtem Lasthebel 30 bzw. Gaspedal ist dieser Leerlaufschalter 32 eingeschaltet und bei nicht betätigtem Lasthebel 30 ist er ausgeschaltet, so dass durch diese digitale Information erkannt werden kann, ob der Lasthebel 30 betätigt wird. Der Lasthebelsensor 31 detektiert den Grad der Betätigung des Lasthebels 30.

Die Fig. 1 zeigt neben dem Lasthebel 30 und den damit in Verbindung stehenden Sensoren ein Bremsenbetätigungselement 40 zur Betätigung der Betriebsbremse oder der Feststellbremse, wie z. B. ein Bremspedal, einen Handbremshebel oder ein hand- oder fußbetätigtes Betätigungselement der Feststellbremse. Zumindest ein Sensor 41 ist an dem Betätigungselement 40 angeordnet und überwacht dessen Betätigung. Der Sensor 41 ist beispielsweise als digitaler Sensor, wie z. B. als Schalter, ausgestaltet, wobei dieser detektiert, dass das Bremsenbetätigungselement 40 betätigt oder nicht betätigt ist. Mit dem Sensor 41 kann eine Signaleinrichtung, wie z. B. eine Bremsleuchte, in Signalverbindung stehen, welche signalisiert, dass die Bremse betätigt ist. Dies kann sowohl für die Betriebsbremse als auch für die Feststellbremse erfolgen. Der Sensor 41 kann jedoch auch als analoger Sensor ausgestaltet sein, wobei ein solcher Sensor, wie beispielsweise ein Potentiometer, den Grad der Betätigung des Bremsenbetätigungselementes 41 ermittelt. Auch dieser Sensor kann mit einer Signaleinrichtung in Signalverbindung stehen.

Nachfolgend wird die vorliegende Erfindung beschrieben, bei der eine geeignete Steuerung für einen Fahrzeugtriebstrang mit einem Kurbelwellenstartergenerator vorgeschlagen wird. Die Erfindung ist in Anspruch 1 wiedergegeben und mit Ausgestaltungen in den abhängigen Ansprüchen.

Es werden Strategien zum Steuern eines Fahrzeugtriebstrangs vorgesehen, welcher z. B einem Verbrennungsmotor, einem Kurbelwellenstartergenerator zwischen zwei Kupplungen und ein automatisiertes Schaltgetriebe (ASG) umfasst.

Die Vorteile durch die Verwendung eines Startergenerators liegen zum einen in der Komfortsteigerung für den Fahrer (u.a. Torsionsschwingungsdämpfung) und zum anderen in der Möglichkeit der Energierückgewinnung (Rekuperation).

Eine besonders vorteilhafte Anordnung besteht in der Plazierung des Startergenerators zwischen zwei Kupplungen an der Kurbelwelle, weil damit die Möglichkeit besteht, den Verbrennungsmotor während der Schubphasen vom Abtrieb abzukoppeln, um Energie durch elektrische Bremsen zurückzugewinnen. Diese Anordnung wird im folgenden beschrieben.

Bei dieser Anordnung ist zu beachten, dass der Verbrennungsmotor beim Beenden einer Rekuperationsphase gestartet werden sollte, ohne dass der Fahrer einen Ruck verspürt. Die gleiche Situation liegt vor, wenn während einer lediglich über die E-Maschine durchgeführte Anfahrt der Verbrennungsmotor zur Erhöhung der Zugkraft zugeschaltet werden muss. Dies kann z. B. bei einer Berganfahrt oder bei einer gering geladenen Batterie notwendig sein.

Um Entscheiden zu können, wann während einer Anfahrt der Verbrennungsmotor zugeschaltet werden soll, müssen sinnvolle Kriterien definiert werden.

Gemäß einer Weiterbildung der Erfindung kann das Anfahren des Fahrzeuges je nach Fahrerwunsch rein elektrisch oder mit Unterstützung des Verbrennungsmotors durchgeführt werden. Der Fahrerwunsch kann dabei über mehrere Wege direkt ermittelt werden. Beispielsweise kann in Abhängigkeit von der Position eines Fahrprogrammschalters über den Anfahrmodus entschieden werden, wie die Anfahrt durchgeführt werden soll. Z. B. bei aktiviertem Economy-Programm kann eine rein elektrische Anfahrt und bei aktiviertem Sport-Programm kann mit dem Verbrennungsmotor oder auch in Kombination mit dem elektrischen Antrieb eine Anfahrt vorgesehen werden. Es ist auch möglich, andere Kombinationen zu wählen.

Eine weitere Möglichkeit besteht in der Auswertung der Fahrpedalposition. Das Zuschalten des Verbrennungsmotors während einer elektrischen Anfahrt könnte aktiviert werden, wenn z. B. ein Kickdown-Schalter für mehr als eine bestimmte Zeitdauer betätigt wird. Ferner kann eine Zuschaltung erfolgen, wenn z. B. die Pedalposition eine gewisse Schwelle überschreitet und/ oder eine weitere Schwelle für mehr als eine bestimmte Zeitdauer überschritten wird. Es ist auch denkbar, dass der Verbrennungsmotor aktiviert wird, wenn die zeitliche Änderung der Pedalposition einen bestimmten positiven Wert überschreitet. Schließlich ist auch eine beliebige Kombination der genannten und weiteren Möglichkeiten denkbar.

Eine andere Weiterbildung der Erfindung kann vorsehen, dass der Verbrennungsmotor bei einer Anfahrt dann hinzugeschaltet wird, wenn z. B. die Steuerung bemerkt, dass das Zugkraftangebot nicht dem Fahrerwunsch entspricht. Dies kann bevorzugt durch einen Vergleich zwischen der Fahrzeuglängsbeschleunigung, welche z. B. anhand der zeitlichen Änderung der Raddrehzahlen berechnet wird, und der aufgrund der berechneten Zugkraft, welche anhand der Drehmomente des Verbrennungsmotors, der E-Maschine und der Kupplungen berechnet wird, vermuteten Beschleunigung ermittelt werden. Wenn z. B. die tatsächliche Fahrzeugbeschleunigung für mehr als eine gewisse Zeitdauer um mehr als einen bestimmten Betrag kleiner als die aufgrund der berechneten Zugkraft angenommene Beschleunigung ist, wird das Zuschalten des Verbrennungsmotors initiiert.

Im Rahmen einer weiteren Ausgestaltung der Erfindung kann vorgesehen sein, dass durch gezieltes Ansteuern der beiden Kupplungen das Aktivieren des Verbrennungsmotors ohne nennenswerte Komforteinbußen für den Fahrer zu realisieren ist. Die Idee, den Motor zu aktivieren, nachdem die getriebeseitige Kupplung geöffnet wurde, ist aufgrund der damit verbundenen Zugkraftunterbrechung nicht akzeptabel. Eine bessere Lösung ist deshalb, das Zuschalten des Verbrennungsmotors nachdem die getriebeseitige Kupplung gezielt in den gleitenden Zustand versetzt wurde. Während dieser Phase ist der Abtrieb vom Antrieb abgekoppelt. Somit kann über das Reibmoment der getriebeseitigen Kupplung zudem das Abtriebsmoment auf einem für den Fahrer akzeptablen Niveau gehalten werden.

Ein möglicher Ablauf der erfindungsgemäßen Strategie kann folgendermaßen durchgeführt werden.

Zunächst wird die Situation "Aktivieren des Verbrennungsmotors" erkannt. Falls die getriebeseitige Kupplung sich im haftenden Zustand befindet, wird das übertragbare Moment an der getriebeseitigen Kupplung derart abgebaut, bis die Kupplung in den rutschenden Zustand übergeht. Dieser Abbau könnte sowohl über eine Momentensteuerung als auch über eine Wegsteuerung an der Stelleinrichtung für diese Kupplung realisiert werden.

Wenn die Schlupfphase sicher erreicht wird (Verriegelungszeit, Mindestschlupf), kann der Verbrennungsmotor mit der E-Maschine zugeschaltet werden. Dies kann bevorzugt durch ein gesteuertes Schließen der motorseitigen Kupplung, z. B. mittels Momentensteuerung, Wegsteuerung oder dergleichen, erreicht werden.

Der schlupfende Zustand an der getriebeseitigen Kupplung sollte aufrecht erhalten werden, bis die motorseitige Kupplung in den haftenden Zustand übergegangen ist und dabei eventuell entstandene Schwingungen im Verbrennungsmotor und in der E-Maschine hinreichend abgeklungen sind.

Die Schlupfphase könnte durch ein Konstanthalten des Abtriebsmoments mit Schlupfüberwachung aufrecht erhalten werden. Besonders vorteilhaft ist es, wenn eine Schlupfregelung für die getriebeseitige Kupplung vorgesehen wird. Dabei wird das Abtriebsmoment durch das Reibmoment an dieser Kupplung entsprechend dem Fahrerwunschmoment eingestellt. Die Höhe des Schlupfes kann derart gewählt werden, dass einerseits ein ungewolltes Haften vermieden wird und andererseits die Verlustleistung an dieser Kupplung gering bleibt.

Wenn die Schlupfphase beendet wird (Bedingung siehe vorletzten Absatz), werden der Verbrennungsmotor und die E-Maschine beschleunigt, wobei durch gezieltes Einkuppeln das Haften der getriebeseitigen Kupplung erreicht wird. Die Ansteuerung der getriebeseitigen Kupplung kann dabei entsprechend dem Einkuppeln während eines Anfahr- oder Schaltvorgangs bei einem Fahrzeug mit automatisierter Kupplungsbetätigung erfolgen.

Dieses erfindungsgemäße Verfahren wird sowohl bei Anfahrten als auch beim Beenden von Rekuperationsphasen angewendet werden.

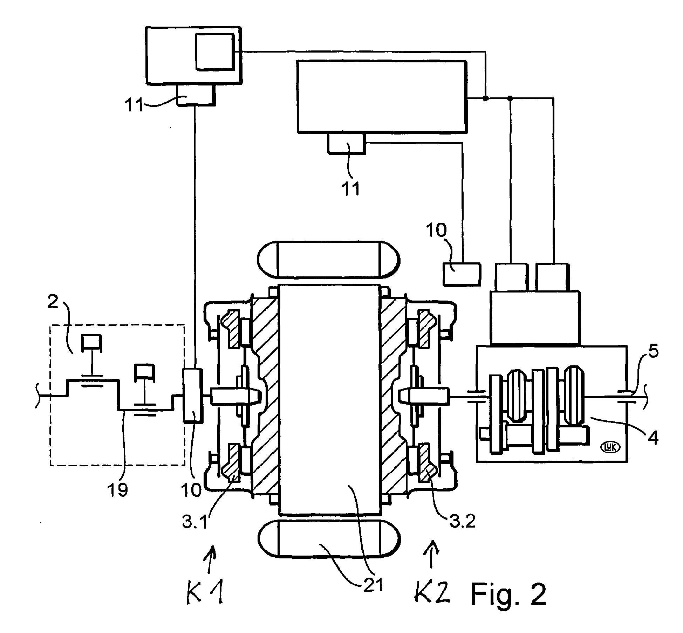

In Figur 2 ist schematisch eine mögliche Anordnung gezeigt, bei der ein Startergenerator zwischen zwei Kupplungen angeordnet ist. Dabei sind mit M1 bis M4 die Gleichstrommotoren bezeichnet. Ferner sind MC der Hauptzylinder, mit SC der Hilfszylinder und mit CSC der konzentrisch angeordnete Hilfszylinder gekennzeichnet.

Nachfolgend wird eine weitere Ausgestaltung der vorliegenden Erfindung beschrieben, bei der ein Impulsstart z. B. bei Fahrzeugen mit einem Startergenerator mit schlupfender Kupplung vorgeschlagen wird.

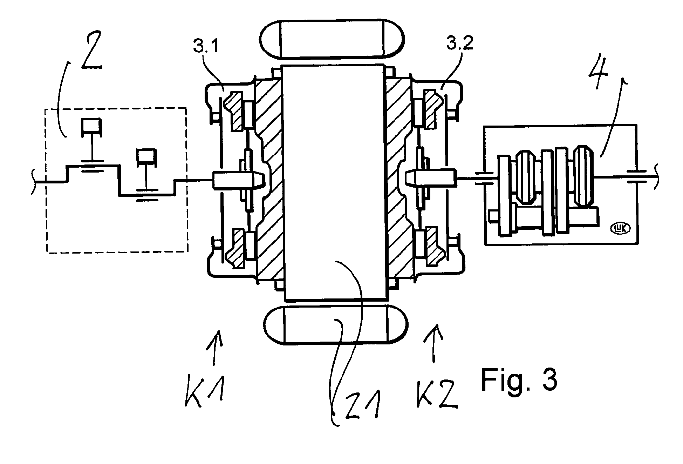

Für den Einsatz eines Startergenerators gibt es verschiedene Konfigurationsmöglichkeiten. Eine Konfigurationsmöglichkeit ist in Figur 3 dargestellt. Hierbei ist der Startergenerator zwischen zwei Kupplungen K1 und K2 angeordnet. Die Kupplung K1 verbindet den Startergenerator mit dem Verbrennungsmotor, wobei die Kupplung K2 den Startergenerator mit dem Getriebe verbindet.

Es gibt verschiedene Fahrsituationen, wie z. B. beim Anfahren mit einem Elektromotor, in denen die Kupplung K2 ein Drehmoment überträgt, wobei die Kupplung K1 jedoch geöffnet ist und der Verbrennungsmotor nicht aktiviert ist. Wenn in dieser Situation der Verbrennungsmotor zugeschaltet werden soll, kann die Kupplung K1 geschlossen werden, um den Verbrennungsmotor zu starten.

Bei diesem Schließen der Kupplung kann nun das Moment derart gesteuert werden, dass der Fahrer möglichst geringe bzw. keine Rückwirkungen auf den Triebstrang wahrnimmt. Dies ist steuerungstechnisch nicht leicht zu beherrschen, insbesondere unter Berücksichtigung der verfügbaren Ansteuerungs- und Signalgenauigkeit.

Demzufolge wird erfindungsgemäß vorgeschlagen, dass bevorzugt während des Startvorgangs die Kupplung K2 schlupfend betrieben wird. Dadurch kann, unter der Voraussetzung, dass bis zum Ende des Startvorgangs der Schlupf >0 ist, sichergestellt werden, dass sich die Momentenänderungen an der Startergenerator-/Verbrennungsmotorseite nicht auf den Triebstrang auswirken.

Gemäß der Erfindung wird ein Startvorgang folgendermaßen durchgeführt:

1. Verbrennungsmotor steht, Kupplung K1 geöffnet, Kupplung K2 geschlossen, ohne Schlupf, Fahrzeug fährt ausschließlich mit elektromotorischem Antrieb. Alternativ ist es möglich, daß der Startergenerator sich im Rekuperationsbetrieb befindet. Dabei ist es für diese Situationen entscheidend, dass die Kupplung K2 sich im Schlupf befindet.

2. Kupplung K2 und der Startergenerator werden derart angesteuert, dass möglichst ruckfrei ein leichter Schlupf an K2 eingestellt wird. Das übertragende Moment an K2 sollte dafür nahezu genauso groß sein, wie das vorher abgegebene Antriebsmoment des Elektromotors.

3. Das Moment des Startergenerators wird erhöht, gleichzeitig wird die Kupplung K1 geschlossen. Hierbei darf das Kupplungsmoment K1 nicht (wesentlich) über dem zusätzlichen Moment des Startergenerators liegen. Der Motor wird gestartet.

Es ist denkbar, dass der Startvorgang modifiziert wird, um diesen weiter zu optimieren.

Alternativ kann auch vorgesehen sein, dass zunächst der Startergenerator auf eine höhere Drehzahl beschleunigt wird, wobei die Kupplung K2 weiterhin ein konstantes Moment überträgt. Danach kann die Kupplung K1 geschlossen werden. Das von der Kupplung K1 übertragende Moment kann nun wesentlich höher als das zusätzliche Moment des Startergenerators sein. Dadurch wird dieser abgebremst und die kinetische Energie wird vom Startergenerator auf den Verbrennungsmotor für den Startvorgang übertragen. Dabei sollte darauf geachtet werden, dass die Kupplung K2 weiterhin ständig im Schlupf betrieben wird, also die Drehzahl des Startergenerators nicht unter die Getriebeeingangsdrehzahl des Getriebes sinkt.

Die vorgeschlagene Steuerstrategie kann bevorzugt bei Hybridfahrzeugen, bei Fahrzeugen mit einem elektrischen Schaltgetriebe (ESG) oder dergleichen eingesetzt werden.

Nachfolgend wird eine nächste Ausgestaltung der vorliegenden Erfindung beschrieben, bei der ein geeignetes Verfahren zum Steuerung bevorzugt der motorseitigen Kupplung bei einem System mit einem Startergenerator, einem Verbrennungsmotor, einer Zweifachkupplung und einem automatisierten Schaltgetriebe (ASG) vorgeschlagen wird.

Eine Aufgabe der Erfindung liegt darin, ein Verfahren zur Ansteuerung der motorseitigen Kupplung zu realisieren, durch das ein komfortables Zuschalten des Verbrennungsmotors ermöglicht wird.

Bei einem System mit einem Startergenerator, einem Verbrennungsmotor, einer Zweifachkupplung und einem automatisierten Schaltgetriebe (ASG), wie es schon in Figur 2 gezeigt ist, dient die motorseitige Kupplung in erster Linie zum Aktivieren des Verbrennungsmotors. Neben dem Zuschalten des Verbrennungsmotors bei Fahrzeugstillstand zur Anfahrt mit dem Verbrennungsmotor und dem Startergenerator kann auch das Zuschalten bei fahrendem Fahrzeug in folgenden Situationen erforderlich sein:

> ➤ Ende einer Rekuperationsphase (Fahrer betätigt das Gaspedal)
> ➤ Eine im ersten Augenblick rein elektrisch durchgeführte Anfahrt kann von dem Verbrennungsmotor unterstützt werden, z. B. wenn die Zugkraft nicht ausreicht.

Es sind auch noch andere Situationen denkbar, in denen das Zuschalten des Verbrennungsmotors vorteilhaft ist.

Die getriebeseitige Kupplung kann beim Zuschalten im haftenden Zustand verbleiben, um die Verlustenergie gering zu halten. Ansonsten kann auch das Zuschalten des Verbrennungsmotors mit schlupfender getriebeseitiger Kupplung durchgeführt werden.

Zum Aktivieren bzw. Zuschalten des Verbrennungsmotors kann nun die motorseitige Kupplung durch eine Momenten- und/oder Wegsteuerung (Weg des Stellgliedes) angesteuert werden, bei der das von dieser Kupplung übertragbare Reibmoment bevorzugt monoton oder dergleichen ansteigt. Der Übergang vom gleitenden in den haftenden Zustand kann in diesem Fall jedoch sehr unkomfortabel sein. Der Grund dafür kann darin liegen, dass das übertragende Moment der Kupplung einen sprungförmigen Verlauf aufweist, beispielsweise von einem großen negativen Wert, z. B. -100 Nm, auf einen kleinen Wert, welcher positiv oder negativ sein kann, je nachdem, ob der Verbrennungsmotor bereits Drehmoment erzeugt oder nicht. Dieses kann sich in einem starken z. B. positiven Ruck äußern.

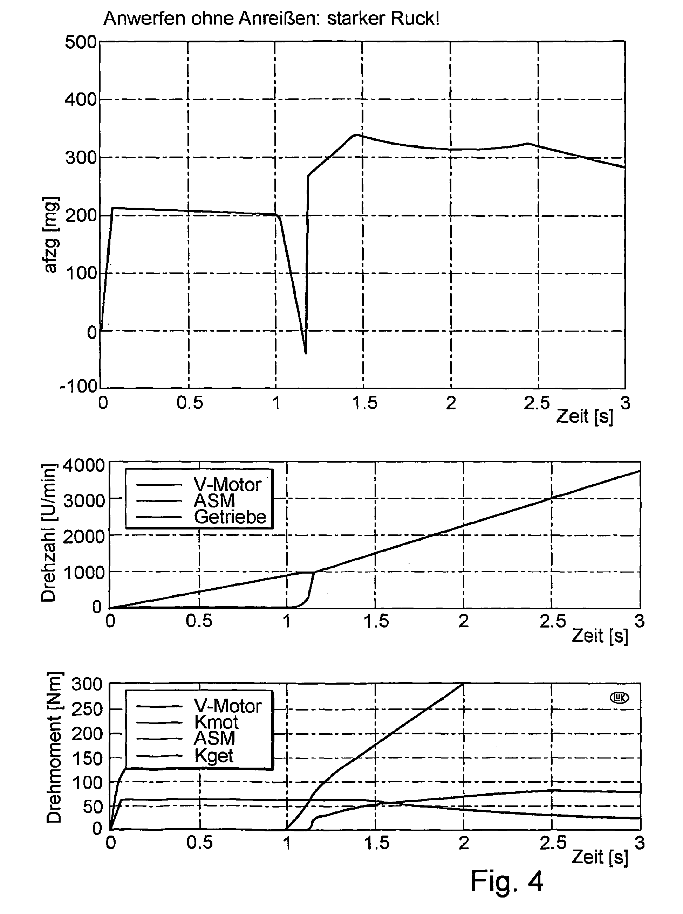

Dies ist aus Figur 4 ersichtlich, welche drei Diagramme zeigt. In dem oberen Diagramm ist die Fahrzeugbeschleunigung afzg über der Zeit dargestellt. Aus dem Verlauf ist der Ruck durch das Minimum angedeutet. Der Ruck tritt auch bei einem Anschleppen eines Fahrzeugs mit einem Handschaltgetriebe auf.

Ferner sind in den beiden unteren Diagrammen in Figur 4 die Verläufe der Drehzahlen des Verbrennungsmotors, des Getriebes und des Asynchronmotors sowie die Verläufe der Momente des Verbrennungsmotors, der motorseitigen Kupplung, der getriebeseitigen Kupplung und des Asynchronmotors über der Zeit dargestellt.

Gemäß der Erfindung wird bevorzugt die motorseitige Kupplung derart angesteuert ("Anreißen des Verbrennungsmotors"), dass der beschriebene Ruck stark verringert wird. Ein Verfahren, welches dies ermöglicht, wird nachfolgend beschrieben:

1. Die Entscheidung, den Verbrennungsmotor zuzuschalten, wird von der Steuerung des Systems getroffen.

2. Bei einer Anfahrt wird das (positive) Drehmoment des Startergenerators beibehalten. Wenn das Ende einer Rekuperationsphase vorliegt, kann das Moment des Startergenerators entweder auf einen positiven Wert angehoben, z. B. durch eine Rampenfunktion oder durch eine andere komfortable Übergangsfunktion, oder zuerst auf einen negativen Wert belassen werden.

3. Danach kann an der motorseitigen Kupplung mittels einer Weg oder Momentensteuerung ein Reibmoment aufgebaut werden, welches das Schleppmoment des Verbrennungsmotors überwindet und die Drehzahl des Verbrennungsmotors ansteigen lässt, welches als "Anreißen des Verbrennungsmotors" bezeichnet wird.

a) Bei einer Anfahrt kann der maximale Gradient des Reibmoments derart gewählt werden, dass die Fahrzeugbeschleunigung nicht abrupt abnimmt.
b) Wenn das Ende einer Rekuperationsphase vorliegt, kann das Drehmoment des Startergenerators durch Kompensation des Kupplungsmoments derart gewählt werden, dass die resultierende Fahrzeugbeschleunigung positiv oder negativ konstant bleibt.

4. Bevor die Drehzahl des Verbrennungsmotors die Drehzahl des Startergenerators erreicht, kann das übertragbare Drehmoment der Kupplung wieder abgebaut werden, vorzugsweise auf einen Wert von 0 Nm, um bei Drehzahlgleichheit a) kein Haften oder b) ein Haften mit sehr geringem Ruck zu realisieren. Der Beginn des Abbaus des Reibmoments kann bevorzugt wie folgt bestimmt werden:

- Die Drehzahl des Verbrennungsmotors überschreitet eine Drehzahlschwelle (z. B. 300 U/min).
- Die Schlupfdrehzahl $n_{VM}$-$n_{SG}$ überschreitet einen Schwellwert (z. B. -500 U/min.)
- Eine der ersten beiden Bedingungen ist erfüllt und der Gradient der Motordrehzahl (oder der Schlupfdrehzahl) überschreitet einen Grenzwert.
- Der Weg des Stellgliedes erreicht eine Schwelle ("Anreißpunkt).
- Eine Kombination der vorangegangenen Bedingungen ist erfüllt.

Der Abbau des Reibmomentes kann, wie unter 3a) und 3b) beschrieben, durchgeführt werden (Gradientenbegrenzung oder mit Momentenkompensation durch den Startergenerator).

5. Wenn während des Schrittes 4. kein Haften herbeigeführt wird (Variante 4a), kann die Kupplung erst dann wieder geschlossen werden, wenn die Drehzahl des Verbrennungsmotors die Drehzahl des Startergenerators um einen gewissen Wert überschritten hat, oder wenn z. B. aufgrund einer Gradientenbetrachtung sicher ist, dass diese Situation eintreten wird.

6. Nun kann eine Einkuppelstrategie, wie sie bei Fahrzeugen mit einem elektronischen Kupplungsmanagement (EKM) oder mit einem automatisierten Schaltgetriebe (ASG) verwendet wird, durchgeführt werden. Zum Einkuppeln wird das Reibmoment über eine Weg- oder Momentensteuerung verändert, ebenso kann der bereits gestartete Verbrennungsmotor derart gesteuert werden, dass das Verschleifen der Drehzahlen komfortabel gestaltet wird.

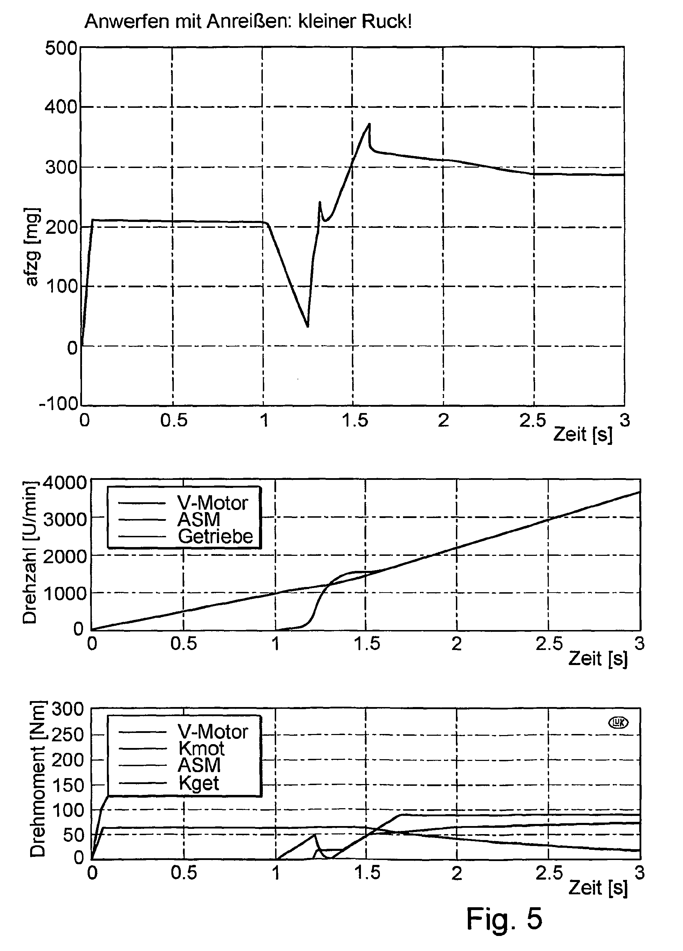

Das vorgeschlagene Verfahren insbesondere zum Ansteuern der motorseitigen Kupplung kann auch noch geeignet modifiziert werden, um es weiter zu optimieren. Ein Zuschalten des Verbrennungsmotors mit sogenanntem Anreißen mit einem geringen Ruck kann der Figur 5 entnommen werden.
In Figur 5 sind drei Diagramme gezeigt. In dem oberen Diagramm ist die Fahrzeugbeschleunigung afzg über der Zeit dargestellt. Aus dem Verlauf ist der geringe Ruck durch das Minimum angedeutet. Ferner sind in den beiden unteren Diagrammen in Figur 5 die Verläufe der Drehzahlen des Verbrennungsmotors, des Getriebes und des Asynchronmotors sowie die Verläufe der Momente des Verbrennungsmotors, der motorseitigen Kupplung, der getriebeseitigen Kupplung und des Asynchronmotors über der Zeit dargestellt.
Um die beschriebene Ansteuerung der Kupplung geeignet durchführen zu können, ist eine Kenntnis des Reibmomentes als Funktion des Stellweges von Vorteil.
Ein weiterer Aspekt der Erfindung besteht darin, dass als Anhaltspunkt für diese Funktion der "Anreißpunkt" verwendet wird, der als der Weg der Stelleinrichtung definiert ist.
Dieser Anreißpunkt wird ermittelt, in dem beim beschriebenen Startvorgang die Motordrehzahl beobachtet wird. Wenn diese einen bestimmten Schwellwert größer 0 U/min, z. B. n=100 U/min oder dergleichen, erreicht, wird die aktuelle Position der Stelleinrichtung festgehalten und somit der Anreißpunkt bestimmt. Dabei kann dieser Schwellwert auch der kleinste mit dem jeweiligen Messprinzip auflösbare Drehzahlwert oder dergleichen sein.
Der Wert des derart ermittelten Punktes kann bevorzugt in einem flüchtigen Speicher oder dergleichen für den weiteren Verlauf des Fahrzyklus und/oder in einem nicht flüchtigen Speicher für spätere Fahrzyklen abgelegt werden. Bei einem weiteren Steuervorgang der Kupplung können nun die Vorgaben an die Stelleinrichtung der Kupplung auf diesen Punkt bezogen werden. Auf diese Weise kann z. B. nach dem Erreichen des Anreißpunktes der Stellweg, wie in dem Schritt 4. erwähnt, wieder zurückgenommen werden. Ebenso ist auch ein Absenken der Verstellgeschwindigkeit kurz vor Erreichen des Punktes denkbar.
Da der Anreißpunkt sehr stark vom Schleppmoment des Motors und damit von der Temperatur abhängen wird, kann in dem Speicher ein um einen Temperaturfaktor und/oderoffset korrigierter Wert des Anreißpunktes abgelegt werden.
Nachfolgend wird eine weitere mögliche Ausgestaltung der vorliegenden Erfindung beschrieben, bei der z. B. die Drehzahlinformation eines Startergenerators bevorzugt für die Steuerung eines automatisierten Schaltgetriebes (ASG) verwendet wird.
Eine Aufgabe der vorliegenden Erfindung kann darin bestehen, dass die Steuerung hinsichtlich des Komforts, der Verfügbarkeit und der Sicherheit eines automatisierten Schaltgetriebes (ASG) durch Verwendung der Drehzahlinformation eines Startergenerators verbessert wird.
Insbesondere bei einem ASG-System ist die Kenntnis der Getriebeeingangsdrehzahl von höchster Bedeutung. Aus diesem Grund wird in vielen Fällen ein Sensor direkt am Getriebe angebracht, um diese Drehzahl zu bestimmen. Beispielsweise aus Kostengründen kann auf den Sensor verzichtet werden, wobei die Getriebeeingangsdrehzahl aus der Abtriebsdrehzahl und der aktuell vorliegenden Getriebeübersetzung bestimmt werden kann.
Für die Steuerung eines Startergenerators, der z. B. zwischen dem Verbrennungsmotor und dem Getriebe angeordnet ist, kann die Drehzahl des Rotors erforderlich sein. Der Startergenerator kann dabei durch eine oder zwei Kupplungen vom Verbrennungsmotor und vom Getriebe getrennt sein.

Bei einem System mit einer Kupplung zwischen dem Startergenerator und dem Getriebe ist die Drehzahl des Startergenerators identisch mit der Drehzahl des Verbrennungsmotors. Ein zusätzlicher Drehzahlsensor (gegenüber einem Fahrzeug ohne Startergenerator) ist deshalb nicht unbedingt erforderlich.

Bei einem System mit einer Kupplung zwischen dem Startergenerator und dem Verbrennungsmotor ist die Drehzahl des Startergenerators identisch mit der Drehzahl des Getriebeeingangs. Ein zusätzlicher Drehzahlsensor ist deshalb nur bedingt erforderlich.

Bei einem System mit einer Zweifachkupplung zwischen dem Startergenerator und dem Getriebe ist die Drehzahl des Startergenerators in einigen Situationen identisch mit der Drehzahl des Verbrennungsmotors sowie in einigen Situationen identisch mit der Drehzahl des Getriebeeingangs. Ein zusätzlicher Drehzahlsensor ist deshalb unbedingt notwendig.

Für einen Vierquadrantenbetrieb des Startergenerators kann zudem eine Richtungserkennung von Vorteil sein.

Erfindungsgemäß kann vorgesehen werden, dass die von dem Startergenerator gelieferte Drehzahl- und evtl. Drehrichtungsinformation für die ASG-Steuerung verwendet wird. Auf diese Weise kann der Komfort, die Sicherheit und die Verfügbarkeit des Systems verbessert werden. Es soll in erster Linie (aber nicht ausschließlich) ein System mit einer Zweifachkupplung betrachtet werden, welches in Figur 2 beispielhaft dargestellt ist.

Bevorzugt bei folgenden Strategien können die Drehzahlinformation des Startergenerators verwendet werden:

1. Bei einer unerwarteten Drehzahldifferenz zwischen dem Verbrennungsmotor und dem Startergenerator und/oder zwischen dem Startergenerator und den Raddrehzahlen bevorzugt unter Berücksichtigung der aktuellen Getriebeübersetzung kann die motorseitige und/oder getriebeseitige Kupplung weiter eingerückt werden, um den Schlupf abzubauen.

2. Bei einem Schaltvorgang mit geschlossener Kupplung zwischen dem Startergenerator und dem Getriebeeingang kann der Zeitpunkt des Beginns und des Endes des Synchronisationsvorgangs detektiert werden. Dies kann bevorzugt für die Steuerung des Schaltaktors, die Adaption der Synchronpunkte auch bereits bei einer Erstinbetriebnahme oder dergleichen verwendet werden.

3. Bei geschlossener Kupplung zwischen dem Startergenerator und dem Getriebeeingang kann mit Hilfe der Raddrehzahlen der im Getriebe eingelegte Gang ermittelt und somit zur Plausibilisierung der Position der Getriebestelleinrichtung verwendet werden.

4. Bei geschlossener Kupplung zwischen dem Startergenerator und dem Getriebeeingang können die Signale der Raddrehzahlsensoren plausibilisiert und/oder evtl. ersetzt werden. Wenn z. B. das Signal eines Raddrehzahlsensors ausgefallen ist, kann bei eingelegtem, bekanntem Gang die fehlende Raddrehzahl aus dem Drehzahlsignal des Startergenerators bestimmt werden.

5. Bei einem Ausfall des Raddrehzahlsensors kann in einen Notlauf übergegangen werden, bei dem die getriebeseitige Kupplung stets geschlossen gehalten wird. Dann kann die Fahrzeuggeschwindigkeit, ausgenommen das Getriebe ist im Leerlauf, über die Drehzahl des Startergenerators und die aktuelle Getriebeübersetzung berechnet werden.

6. Mit der Richtungserkennung des Startergenerators kann bei einer rein elektrischen Anfahrt, bei der die motorseitige Kupplung geöffnet und die getriebeseitige Kupplung geschlossen ist, überprüft werden, ob sich das Fahrzeug entsprechend dem Fahrerwunsch in Bewegung setzt und evtl. dagegen vorgegangen werden soll. Wenn z. B. bei einer Anfahrt in einem Vorwärtsgang festgestellt wird, dass das Fahrzeug rückwärts rollt, kann auf eine Berganfahrt geschlossen werden. Als Reaktion kann bevorzugt eine Erhöhung der Bestromung des E-Motors durchgeführt werden, um das Antriebsmoment in Fahrerwunschrichtung zu erhöhen (Hillholder).

7. Die Drehzahlinformation des Startergenerators kann in Verbindung mit den Motor- und/oder Raddrehzahlen dazu verwendet werden, um die Temperatur von motor- und/oder getriebeseitiger Kupplung abzuschätzen. Dazu kann z. B. ein Temperaturmodell verwendet werden, wie es bereits bei Fahrzeugen mit einem elektronischen Kupplungsmanagement (EKM) oder mit einem automatisierten Schaltgetriebe (ASG) eingesetzt wird.

Nachfolgend wird eine weitere Ausgestaltung der vorliegenden Erfindung beschrieben, bei der ein Fahrzeug mit einem Hybrid-System bzw. ESG-System mit gleicher Anfahrcharakteristik bei verbrennungsmotorischer und elektromotorischer Anfahrt vorgeschlagen wird.

Auf diese Weise wird unabhängig davon, welche Kraftmaschine für die Anfahrt benutzt wird, dem Fahrer ein reproduzierbares Anfahrgefühl vermittelt.

Bei einer anderen möglichen Strategie kann z. B. bei einer Anfahrsteuerung ein pedalwertabhängiger Kupplungsmomentenverlauf vorgegeben werden, insbesondere bei einer Anfahrt mit dem Verbrennungsmotor, oder alternativ den gleichen Momentenverlauf bei einer elektromotorischen Anfahrt.

Bei einem elektronischen Kupplungsmanagement (EKM) oder bei einem automatisierten Schaltgetriebe (ASG) kann eine Anfahrstrategie verwendet werden, bei der der Kupplungsschlupf auf jeden Fall abgebaut wird, sodass ein ruckfreier Übergang vom Schlupfen zum Haften sichergestellt wird und die Drehzahl- bzw. Momentenschwingungen des Verbrennungsmotors sowie im Antriebsstrang vermieden werden.

Mit dieser Strategie wird in vorteilhafter Weise ein reproduzierbares Beschleunigungsverhalten beim Anfahren realisiert.

Ferner besteht die Aufgabe, auch bei einem hybriden Antriebssystem, bei dem sowohl verbrennungsmotorisch als auch elektromotorisch angefahren werden kann, Strategien zu entwickeln, die dem Fahrer unabhängig vom gewählten Motor ein reproduzierbares Anfahrverhalten geben.

Dies gilt insbesondere für Anfahren mit betätigtem Gaspedal. Die vorgenannte Kupplungssteuerung realisiert ein Kriechen bei aktiviertem Leerlaufschalter (unbetätigtem Fahrpedal), welche für beide Motoren gleichermaßen als zeitabhängiger Momentenaufbau umgesetzt werden kann.

Dabei bestehen eine Vielzahl von Kombinationsmöglichkeiten. Z. B. bei einem verbrennungsmotorischen Anfahren kann die gleiche Strategie, wie bei dem EKM/ASG-System, verwendet werden, wobei die Kupplung bevorzugt drehzahlabhängig geschlossen wird.

Bei einer kombinierten Anfahrt mit dem Verbrennungsmotor und dem Elektromotor kann auch das Triebstrangmoment durch das drehzahlabhängige Schließen der Anfahrkupplung aufgebaut werden. Die Koordination der beiden Antriebsmaschinen zur Umsetzung des Fahrerwunsches erfolgt in einem übergeordneten Koordinator. Es gibt also aus Sicht des Anfahrverhaltens keinen Unterschied zu einer reinen verbrennungsmotorischen Anfahrt. Die Kupplungssteuerung verarbeitet dabei das addierte Drehmoment von Verbrennungs- und Elektromotor.

Bei einer rein elektromotorischen Anfahrt kann die Anfahrkupplung von Beginn an geschlossen und das Triebstrangmoment allein durch den E-Motor aufgebaut werden.

Es gibt einen speziellen Programmteil in der Steuerung, der auf der Grundlage des Fahrerwunsches das Hochlaufen des Verbrennungsmotors simuliert. Basierend auf dieser Information und der in der Steuerung hinterlegten Anfahrparameter (Anfahrkennlinie) wird das entsprechende Kupplungssollmoment berechnet. Dieses wird dann bei einer rein elektromotorischen Anfahrt jedoch nicht an der Kupplung, welche geschlossen ist, sondern an dem Elektromotor eingestellt.

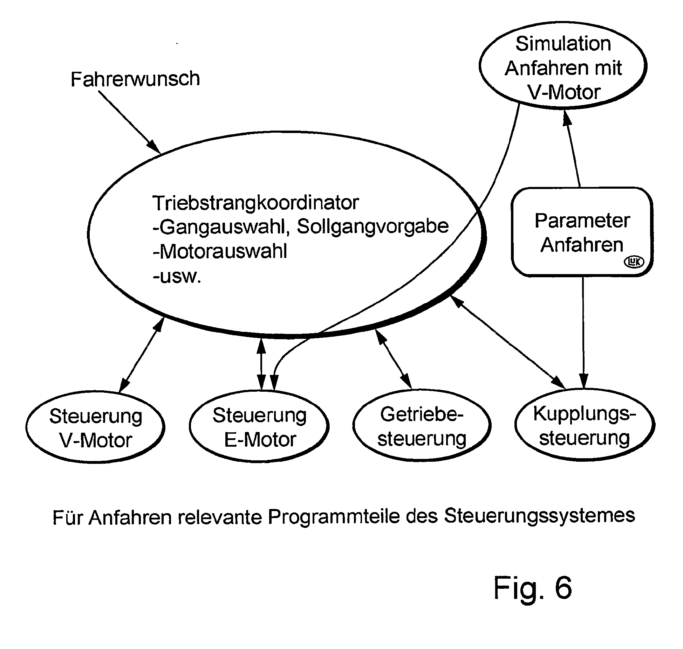

In Figur 6 ist schematisch dargestellt, wie die verschiedenen Programmteile der Steuerungssoftware für ein entsprechendes Fahrzeug vernetzt sind. Es gibt einen übergeordneten Triebstrangkoordinator, der für die Vorgabe der Gänge, für die Aufteilung zwischen den beiden Antriebsmotoren u.a. verantwortlich ist. Die Steuerungen der beiden Antriebsmotoren sowie des Getriebes und der Kupplung werden von diesem Koordinator mit den Informationen über Sollgang, Sollmomente usw. versorgt.

Der zusätzliche Programmteil greift auf die gleichen Applikationsparameter für das Anfahrverhalten des Fahrzeugs zu, wie die Kupplungssteuerung. Das aus der Simulation resultierende Moment wird dann entweder direkt oder über den Koordinator z. B. an die E-Motoren-Steuerung gesendet und dort verarbeitet.

Jeder dieser Programmteile kann grundsätzlich aus mehreren Modulen bestehen. Alle Programmteile in Figur 6 können sich in einem Steuergerät befinden oder auch auf mehrere Steuergeräte, welche miteinander kommunizieren, verteilt sein. Es ist auch möglich, dass die Untermodule eines Programmteils auf verschiedene Steuergeräte verteilt sind, d.h., dass sich die Steuergeräte "die Arbeit teilen".

Zu beachten ist, dass die den Programmteilen zugeordneten Funktionen im gesamten Steuersystem vorhanden sind. Dabei gibt es die verschiedensten Ausführungsmöglichkeiten.

Beispielsweise ist es denkbar, dass anstatt der Simulation auch andere Realisierungs- oder Berechnungsmöglichkeiten des Sollmomentes verwendet werden. Auf diese Weise kann etwa eine feste Kennlinie oder ein einfaches dynamisches Rechenmodell hinterlegt werden, deren Parameter können evtl. offline berechnet werden. Dazu können bevorzugt die entsprechenden Applikationsparameter aus der Kupplungssteuerung herangezogen werden.

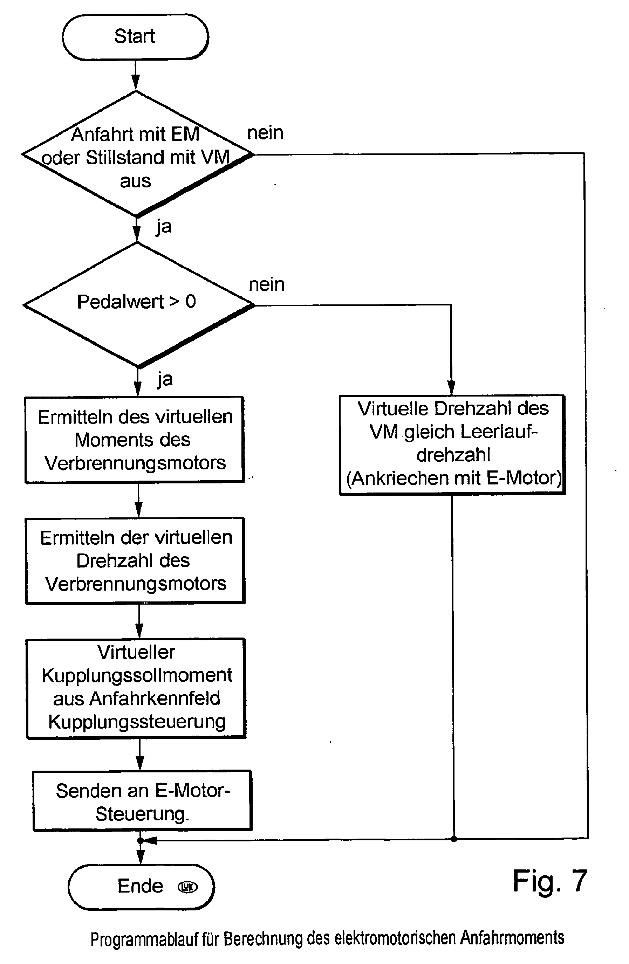

In Figur 7 ist eine mögliche Programmabfolge in dem Programmteil zur Simulation des Verbrennungsmotors dargestellt, wobei der Programmablauf für die Berechnung des elektromotorischen Anfahrmomentes vorgesehen ist.

Dabei kann als Eintrittsbedingung abgefragt werden, ob überhaupt eine rein elektromotorische Anfahrt stattfindet oder bevorsteht.

Auf der Basis des Fahrerwunsches (Pedalwert bzw. Leerlaufschalter) wird dann entschieden, ob für die virtuelle Drehzahl des E-Motors dessen Leerlaufdrehzahl verwendet wird ($n_{VM\_virt} = n_{VM\_Leer}$ Sicherstellen der Anfangsbedingung bei nachfolgender Anfahrt, falls Pedal noch nicht getreten ist), oder ob eine Berechnung des zur Kupplungssteuerung passenden E-Motor-Moments während der Anfahrt erfolgt.

Bei der Simulation des Verbrennungsmotors kann bevorzugt dessen virtuelles Moment anhand des Motorkennfeldes

$$M_{VM\_virt} = M_{VM}(n_{VM\_virt}, Pedalwert)$$

und durch Integration der Bewegungsgleichung auch die neue virtuelle Drehzahl

$$n_{VM\_virt\_alt} = n_{VM\_virt}$$

$$n_{VM\_virt} = n_{VM\_virt\_alt} + \frac{30 \cdot M_{VM\_virt}}{\pi \cdot J_{VM}} \cdot \Delta T$$

berechnet werden.

Diese Daten dienen dann zur Berechnung des virtuellen Kupplungssollmomentes entsprechend des Anfahrkennfeldes der Kupplungssteuerung.

$$M_{R\_Soll\_virt} = M_{Anfahr}(n_{VM\_virt}, n_{Getriebe})$$

Die E-Motoren-Steuerung erhält den Wert des virtuellen Kupplungssollmomentes als Sollvorgabe für den E-Motor. Damit verhält sich das Fahrzeug bei der elektromotorischen Anfahrt so, wie es sich bei einer verbrennungsmotorischen Anfahrt mit gleichem Pedalwert verhalten würde.

Der Kerngedanke bei dieser Simulation ist "Was wäre, wenn mit dem Verbrennungsmotor angefahren wird?". Bei der Berechnung des virtuellen Momentes und der virtuellen Drehzahl des Verbrennungsmotors können auch andere Informationskanäle, wie z. B. Informationen aus der Motorsteuerung des Verbrennungsmotors oder andere Gleichungen, wie z. B. ein anderer Integrationsalgorithmus der Bewegung, verwendet werden.

Die erfindungsgemäße Konzeption kann bevorzugt bei einem Fahrzeug mit einem HybridAntrieb zum Einsatz kommen. Ferner kann die Anfahrstrategie bei elektrischen Anfahrten mit einem Startergenerator oder bei Fahrzeugen mit einem elektrischen Schaltgetriebe (ESG) verwendet werden.

**Patentansprüche**

1. Verfahren zum Betrieb eines Kraftfahrzeuges, dessen Antriebstrang versehen ist mit

   - einem Verbrennungsmotor (2) mit Kurbelwelle,
   - einem Kurbelwellenstartergenerator (21),
   - einem Getriebe (4),
   - einer motorseitigen Kupplung (K1), die zwischen dem Startergenerator (21) und dem Verbrennungsmotor (2) angeordnet ist,
   - einer getriebeseitigen Kupplung (K2), die zwischen dem Startergenerator (21) und dem Getriebe (4) angeordnet ist,
   - wobei die Steuerung des Antriebstranges mittels des Startergenerators (21) erfolgt, **dadurch gekennzeichnet, daß** ein Startvorgang des Verbrennungsmotors (2) folgendermassen durchgeführt wird:

      - der Verbrennungsmotor (2) steht, die motorseitige Kupplung (K1) ist geöffnet, die getriebeseitige Kupplung (K2) ist geschlossen ohne Schlupf, und das Fahrzeug fährt ausschließlich mit dem elektromotorischem Antrieb oder der Startergenerator (21) befindet sich im Rekuperationsbetrieb,
      - die getriebeseitige Kupplung (K2) und der Startergenerator (21) werden derart angesteuert, daß möglichst ruckfrei ein leichter Schlupf an der getriebeseitigen Kupplung (K2) eingestellt wird, wobei das übertragende Moment an der getriebeseitigen Kupplung (K2) so groß sein soll, wie das vorher abgegebene Antriebsmoment des elektromotorischen Antriebs,
      - und das Moment des Startergenerators (21) wird erhöht und gleichzeitig wird die motorseitige Kupplung (K1) geschlossen, wobei deren Kupplungsmoment nicht wesentlich über dem zusätzlichen Moment des Startergenerators (21) liegen darf, und der Verbrennungsmotor (2) wird zugeschaltet, also gestartet.

2. Verfahren nach Anspruch 1, **dadurch gekennzeichnet, dass** der Startergenerator (21) zum Anwerfen des Verbrennungsmotors (2) während einer elektrischen Anfahrt zu dem Zeitpunkt aktiviert wird, wenn ein Kickdown-Schalter (22) für eine bestimmte Zeitdauer betätigt wird.

3. Verfahren nach Anspruch 1 und 2, **dadurch gekennzeichnet, dass** der Startergenerator (21) zum Anwerfen des Verbrennungsmotors (2) während einer elektrischen Anfahrt zu dem Zeitpunkt aktiviert wird, wenn das Fahrpedal (23) eine definierte Stellung überschreitet oder über eine definierte Zeitdauer hinaus betätigt ist

4. Verfahren nach Anspruch 1, **dadurch gekennzeichnet, dass** der Startergenerator (21) zum Anwerfen des Verbrennungsmotors (2) aktiviert wird, wenn die Fahrzeug-Ist-Beschleunigung nicht der definierten Fahrzeug-Soll-Beschleunigung entspricht.

5. Verfahren nach Anspruch 1 bis 4, **dadurch gekennzeichnet, dass** ausgehend von einer elektrischen Anfahrt des Fahrzeuges (1), die Kupplung (K2) zwischen Getriebe (4) und Startergenerator (21) so lange schlupfend betrieben wird, bis die zweite Kupplung (K1) zwischen Startergerator (21) und Verbrennungsmotor (2) schlupffrei arbeitet.

6. Verfahren nach einem der Ansprüche 1 bis 5, **dadurch gekennzeichnet, dass** die Zuschaltung der zwischen Startergenerator (21) und Verbrennungsmotor (2) angeordneten Kupplung (K1) einer vom Kraftstoffverbrauch abhängigen logischen Steuerung (13) unterliegt.

7. Verfahren nach einem der Ansprüche 1 bis 6, **dadurch gekennzeichnet, dass** die Zuschaltung der zwischen Startergenerator (21) und Verbrennungsmotor (2) angeordnete Kupplung (K1) einer vom gewählten Fahrverhalten abhängigen logischen Steuerung (13) unterliegt.

8. Verfahren nach einem der Ansprüche 1 bis 7, **dadurch gekennzeichnet, dass** bei Anfahrt des Fahrzeuges (1) das Drehmoment des Startergenerators (21) entweder beibehalten oder verändert und gleichzeitig an der motorseitigen Kupplung (K1) über eine Weg- oder Momentensteuerung ein Reibmoment aufgebaut wird

9. Verfahren nach Anspruch 8, **dadurch gekennzeichnet, dass** vor Erreichen der Drehzahlgleichheit von Verbrennungsmotor (2) und Startergenerator (21) das übertragbare Drehmoment der getriebeseitigen Kupplung (K2) wieder bis zum Schlupfzustand abgebaut wird.

10. Verfahren nach Anspruch 9, **dadurch gekennzeichnet, dass** eine definierte Drehzahlschwelle des Verbrennungsmotors (2) überschritten wird.

11. Verfahren nach Anspruch 10, **dadurch gekennzeichnet, dass** ein definierter Schlupfdrehzahl-Schwellwert überschritten wird.

12. Verfahren nach einem der Ansprüche 8 und 9, **dadurch gekennzeichnet, dass** der Gradient der Motor- oder Schlupfdrehzahl einen Grenzwert überschreitet.

13. Verfahren nach Anspruch 1 bis 12, **dadurch gekennzeichnet, dass** der für das Anwerfen des Verbrennungsmotors (2) ermittelte Wert von der Steuerung in einem flüchtigen Speicher (13a) abgelegt ist.

14. Verfahren nach Anspruch 1 bis 13, **dadurch gekennzeichnet, dass** der für den Zeitpunkt des Anwerfens des Verbrennungsmotors (2) ein im Speicher (13a) der Steuerung hinterlegter Temperaturfaktor Berücksichtigung findet.

15. Verfahren nach Anspruch 1 bis 14, **dadurch gekennzeichnet, dass** in der Steuerung ein Programmteil abgelegt ist, das auf Grundlage definierter Anfahrparameter das jeweils erforderliche Kupplungssollmoment berechnet.

16. Verfahren nach Anspruch 14, **dadurch gekennzeichnet, dass** dieses Programmteil vorzugsweise aus mehreren Modulen bestehen kann und sich entweder in einem Steuergerät (13) befindet oder auf mehrere Steuergeräte (13) aufgeteilt ist, die untereinander kommunizieren.

17. Verfahren nach Anspruch 13 bis 15, **dadurch gekennzeichnet, dass** die Programmteile mit den zugeordneten Funktionen im gesamten System vorhanden sind.

18. Verfahren nach einem der Ansprüche 1 bis 17, **dadurch gekennzeichnet, dass** die Steuerungen Verbrennungsmotors (2), des Getriebes (4) sowie mindestens einer Kupplung von einem Koordinator mit Daten versorgt werden.

19. Verfahren nach einem der Ansprüche 1 bis 18, **dadurch gekennzeichnet, dass** die Getriebeeingangsdrehzahl mittels eines am Getriebe (4) angebrachten Sensors (19a) erfasst wird.

20. Verfahren nach Anspruch 19, **dadurch gekennzeichnet, dass** die Drehzahldifferenzen zwischen Startergenerator (21) und Verbrennungsmotor (2), die Daten vom Radsensor (24) sowie die Temperatur der motor- und getriebeseitigen Kupplungen (K1 und K2) erfasst und von der Getriebesteuerung verarbeitet werden.

## Claims

1. Method for operating a motor vehicle whose drive train is provided with

    - an internal combustion engine (2) with crankshaft,
    - a crankshaft starter generator (21),
    - a gearbox (4),
    - an engine-side clutch (K1) which is arranged between the starter generator (21) and the internal combustion engine (2),
    - a gearbox-side clutch (K2) which is arranged between the starter generator (21) and the gearbox (4),
    - wherein the drive train is controlled by means of the starter generator (21), **characterized in that** a starting process of the internal combustion engine (2) is carried out as follows:

        - the internal combustion engine (2) is stationary, the engine-side clutch (K1) is opened, the gearbox-side clutch (K2) is closed without slip, and the vehicle travels exclusively by means of the electromotive drive or the starter generator (21) is in the recuperation mode,

- the gearbox-side clutch (K2) and the starter generator (21) are actuated in such a way that a slight degree of slip is set at the gearbox-side clutch (K2) with as little jolting as possible, wherein the transmitting torque at the gearbox-side clutch (K2) is to be equal in magnitude to the previously output drive torque of the electromotive drive,

- and the torque of the starter generator (21) is increased and at the same time the engine-side clutch (K1) is closed, wherein the clutch torque of said clutch (K1) must not be significantly above the additional torque of the starter generator (21), and the internal combustion engine (2) is activated, that is to say started.

2. Method according to Claim 1, **characterized in that** in order to start the internal combustion engine (2) turning during an electrical starting process the starter generator (21) is activated at the time when a kickdown switch (22) is activated for a specific time period.

3. Method according to Claim 1 and 2, **characterized in that** in order to start the internal combustion engine (2) turning during an electrical starting process the starter generator (21) is activated at the time when the accelerator pedal (23) exceeds a defined position or is activated for more than a defined time period.

4. Method according to Claim 1, **characterized in that** the starter generator (21) is activated in order to start the internal combustion engine (2) turning when the actual acceleration of the vehicle does not correspond to the defined setpoint acceleration of the vehicle.

5. Method according to Claims 1 to 4, **characterized in that**, starting from an electrical starting process of the vehicle (1), the clutch (K2) between the gearbox (4) and starter generator (21) is operated in slipping fashion until the second clutch (K1) between the starter generator (21) and internal combustion engine (2) operates without slip.

6. Method according to one of Claims 1 to 5, **characterized in that** the engagement of the clutch (K1) which is arranged between the starter generator (21) and internal combustion engine (2) is subject to a logic controller (13) which is dependent on the consumption of fuel.

7. Method according to one of Claims 1 to 6, **characterized in that** the engagement of the clutch (K1) which is arranged between the starter generator (21) and internal combustion engine (2) is subject to a logic controller (13) which is dependent on the selected driving behaviour.

8. Method according to one of Claims 1 to 7, **characterized in that** when the vehicle (1) starts up the torque of the starter generator (21) is either maintained or changed and at the same time a frictional torque is built up at the engine-side clutch (K1) by means of a travel actuation means or torque actuation means.

9. Method according to Claim 8, **characterized in that**, before equality of rotational speed of the internal combustion engine (2) and starter generator (21) is reached, the transmittable torque of the gearbox-side clutch (K2) is reduced again to the slip state.

10. Method according to Claim 9, **characterized in that** a defined rotational speed threshold of the internal combustion engine (2) is exceeded.

11. Method according to Claim 10, **characterized in that** a defined slip/rotational speed threshold is exceeded.

12. Method according to one of Claims 8 and 9, **characterized in that** the gradient of the rotational speed of the motor or slipping rotational speed exceeds a limit value.

13. Method according to Claims 1 to 12, **characterized in that** the value which is acquired for the internal combustion engine (2) to start to turn is stored by the controller in a volatile memory (13a).

14. Method according to Claims 1 to 13, **characterized in that** the temperature factor which is stored in the memory (13a) of the controller for the time when the internal combustion engine (2) starts to turn is taken into account.

15. Method according to Claims 1 to 14, **characterized in that** a program component which calculates the respectively required clutch setpoint torque on the basis of defined starting parameters is stored in the controller.

16. Method according to Claim 14, **characterized in that** this program component can preferably be composed of a plurality of modules and is either located in a control device (13) or distributed among a plurality of control devices (13) which communicate with one another.

**17.** Method according to Claims 13 to 15, **characterized in that** the program components with the associated functions are present in the entire system.

**18.** Method according to one of Claims 1 to 17, **characterized in that** the controllers of the internal combustion engine (2), of the gearbox (4) and of at least one clutch are supplied with data by a coordinator.

**19.** Method according to one of Claims 1 to 18, **characterized in that** the gearbox input rotational speed is sensed by means of a sensor (19a) which is mounted on the gearbox (4).

**20.** Method according to Claim 19, **characterized in that** the differences in rotational speed between the starter generator (21) and internal combustion engine (2), the data from the wheel sensor (24) and the temperature of the engine-side and gearbox-side clutches (K1 and K2) are sensed and processed by the gearbox controller.


**Revendications**

**1.** Procédé pour faire fonctionner un véhicule automobile, dont le train d'entraînement est pourvu des éléments suivantes :

    - un moteur à combustion interne (2) avec un vilebrequin,
    - un générateur-démarreur de vilebrequin (21),
    - une boîte de vitesses (4),
    - un embrayage côté moteur (K1) qui est disposé entre le générateur-démarreur (21) et le moteur à combustion interne (2),
    - un embrayage côté boîte de vitesses (K2) qui est disposé entre le générateur-démarreur (21) et la boîte de vitesses (4),
    - la commande du train d'entraînement s'effectuant au moyen du générateur-démarreur (21), **caractérisé en ce qu'**une opération de démarrage du moteur à combustion interne (2) est effectuée de la manière suivante :

    - le moteur à combustion interne (2) n'est pas en fonctionnement, l'embrayage coté moteur (K1) est ouvert, l'embrayage côté boîte de vitesses (K2) est fermé sans glissement, et le véhicule roule exclusivement avec l'entraînement par moteur électrique ou le générateur-démarreur (21) se trouve en mode de récupération,
    - l'embrayage côté boîte de vitesses (K2) et le générateur-démarreur (21) sont commandés de telle sorte qu'un léger glissement au niveau de l'embrayage côté boîte de vitesses (K2) s'établisse dans la mesure du possible sans à-coups, le couple transmettant à l'embrayage côté boîte de vitesses (K2) devant être aussi grand que le couple d'entraînement fourni préalablement par l'entraînement par moteur électrique,
    - et le couple du générateur-démarreur (21) est augmenté et en même temps l'embrayage côté moteur (K1) est fermé, le couple d'embrayage ne devant pas être sensiblement supérieur au couple supplémentaire du générateur-démarreur (21), et le moteur à combustion interne (2) est connecté, c'est-à-dire démarré.

**2.** Procédé selon la revendication 1, **caractérisé en ce que** le générateur-démarreur (21) est activé pour lancer le moteur à combustion interne (2) pendant un démarrage électrique à l'instant où un commutateur kickdown (22) est actionné pendant une durée déterminée.

**3.** Procédé selon les revendications 1 et 2, **caractérisé en ce que** le générateur-démarreur (21) est activé pour lancer le moteur à combustion interne (2) pendant un démarrage électrique à l'instant où la pédale d'accélérateur (23) dépasse une position définie ou est actionnée au-delà d'une durée définie.

**4.** Procédé selon la revendication 1, **caractérisé en ce que** le générateur-démarreur (21) est activé pour lancer le moteur à combustion interne (2) si l'accélération réelle du véhicule ne correspond pas à l'accélération de consigne définie du véhicule.

**5.** Procédé selon les revendications 1 à 4, **caractérisé en ce qu'**à partir d'un démarrage électrique du véhicule (1), l'embrayage (K2) entre la boîte de vitesses (4) et le générateur-démarreur (21) est utilisé en mode de glissement jusqu'à ce que le deuxième embrayage (K1) entre le générateur-démarreur (21) et le moteur à combustion interne (2) fonctionne sans glissement.

**6.** Procédé selon l'une quelconque des revendications 1 à 5, **caractérisé en ce que** la commutation de l'embrayage (K1) disposé entre le générateur-démarreur (21) et le moteur à combustion interne (2) est sujette à une commande logique (13) dépendant de la consommation de carburant.

**7.** Procédé selon l'une quelconque des revendications 1 à 6, **caractérisé en ce que** la commutation de l'embrayage (K1) disposé entre le générateur-démarreur (21) et le moteur à combustion interne (2) est sujette à une commande logique (13) dépendant du mode de conduite choisi.

**8.** Procédé selon l'une quelconque des revendications 1 à 7, **caractérisé en ce qu'**au démarrage du véhicule (1), le couple du générateur-démarreur (21) est soit conservé soit modifié, et en même temps, un couple de friction est créé au niveau de l'embrayage côté moteur (K1) par le biais d'une commande de course ou de couple.

9. Procédé selon la revendication 8, **caractérisé en ce qu'**avant d'atteindre l'égalité des régimes du moteur à combustion interne (2) et du générateur-démarreur (21), le couple transmissible de l'embrayage côté boîte de vitesses (K2) est à nouveau diminué jusqu'à l'état de glissement.

10. Procédé selon la revendication 9, **caractérisé en ce qu'**un seuil de régime défini du moteur à combustion interne (2) est dépassé.

11. Procédé selon la revendication 10, **caractérisé en ce qu'**une valeur seuil de régime de glissement définie est dépassée.

12. Procédé selon l'une quelconque des revendications 8 et 9, **caractérisé en ce que** le gradient de régime du moteur ou de glissement dépasse une valeur limite.

13. Procédé selon les revendications 1 à 12, **caractérisé en ce que** la valeur détectée pour le lancement du moteur à combustion interne (2) est enregistrée par la commande dans une mémoire volatile (13a).

14. Procédé selon les revendications 1 à 13, **caractérisé en ce que** l'on tient compte pour l'instant du lancement du moteur à combustion interne (2), du facteur de température consigné dans la mémoire (13a) de la commande.

15. Procédé selon les revendications 1 à 14, **caractérisé en ce qu'**une partie de programme est enregistrée dans la commande, laquelle calcule le couple de consigne de l'embrayage requis dans chaque cas sur la base de paramètres de démarrage définis.

16. Procédé selon la revendication 14, **caractérisé en ce que** cette partie de programme peut se composer de préférence de plusieurs modules et se trouve dans un appareil de commande (13) ou est répartie sur plusieurs appareils de commande (13), qui communiquent entre eux.

17. Procédé selon les revendications 13 à 15, **caractérisé en ce que** les parties de programme avec les fonctions associées sont présentes dans l'ensemble du système.

18. Procédé selon l'une quelconque des revendications 1 à 17, **caractérisé en ce que** les commandes du moteur à combustion interne (2), de la boîte de vitesses (4) ainsi que d'au moins un embrayage reçoivent des données envoyées par un coordinateur.

19. Procédé selon l'une quelconque des revendications 1 à 18, **caractérisé en ce que** le régime d'entrée de la boîte de vitesses est détecté au moyen d'un capteur (19a) monté sur la boîte de vitesses (4).

20. Procédé selon la revendication 19, **caractérisé en ce que** les différences de régime entre le générateur-démarreur (21) et le moteur à combustion interne (2), les données du capteur de roue (24) ainsi que la température des embrayages côté moteur et côté boîte de vitesses (K1 et K2) sont détectées et sont traitées par la commande de la boîte de vitesses.

Fig. 1

K1    K2    Fig. 2

Fig. 3

Anwerfen ohne Anreißen: starker Ruck!

Fig. 4

**Anwerfen mit Anreißen: kleiner Ruck!**

Fig. 5

Fahrerwunsch

Simulation
Anfahren mit
V-Motor

Triebstrangkoordinator
-Gangauswahl, Sollgangvorgabe
-Motorauswahl
-usw.

Parameter
Anfahren
(LuK)

Steuerung
V-Motor

Steuerung
E-Motor

Getriebesteuerung

Kupplungssteuerung

Für Anfahren relevante Programmteile des Steuerungssystemes

Fig. 6

```
                    ┌─────────────────┐
                    │      Start       │
                    └─────────────────┘
                             │
                             ▼
                       ◇ Anfahrt mit EM ◇        nein
                       ◇ oder Stillstand mit VM ◇ ─────────────────────────┐
                       ◇     aus      ◇                                     │
                             │                                             │
                             │ ja                                          │
                             ▼                                             │
                       ◇ Pedalwert > 0 ◇          nein                     │
                       ◇              ◇ ──────────────────┐                │
                             │                            │                │
                             │ ja                         │                │
                             ▼                            ▼                │
              ┌─────────────────────────┐    ┌─────────────────────────┐   │
              │   Ermitteln des virtuellen │    │  Virtuelle Drehzahl des │   │
              │   Moments des            │    │  VM gleich Leerlauf-    │   │
              │   Verbrennungsmotors     │    │  drehzahl               │   │
              └─────────────────────────┘    │  (Ankriechen mit E-Motor)│   │
                             │                └─────────────────────────┘   │
                             ▼                            │                │
              ┌─────────────────────────┐                │                │
              │   Ermitteln der virtuellen │                │                │
              │   Drehzahl des           │                │                │
              │   Verbrennungsmotors     │                │                │
              └─────────────────────────┘                │                │
                             │                            │                │
                             ▼                            │                │
              ┌─────────────────────────┐                │                │
              │   Virtueller             │                │                │
              │   Kupplungssollmoment    │                │                │
              │   aus Anfahrkennfeld     │                │                │
              │   Kupplungssteuerung     │                │                │
              └─────────────────────────┘                │                │
                             │                            │                │
                             ▼                            │                │
              ┌─────────────────────────┐                │                │
              │   Senden an E-Motor-     │                │                │
              │   Steuerung.             │                │                │
              └─────────────────────────┘                │                │
                             │                            │                │
                             ◄────────────────────────────┘                │
                             ▼                                             │
                    ┌─────────────────┐                                    │
                    │    Ende   (LuK)  │◄───────────────────────────────────┘
                    └─────────────────┘
```

# Fig. 7

Programmablauf für Berechnung des elektromotorischen Anfahrmoments

**EP 1 497 151 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1177930 A